# EUROPEAN PATENT APPLICATION

(11) **EP 1 400 170 A1**
(43) Date of publication of application: **24.03.2004**
(21) Application number: 03252718.6
(22) Date of filing: 30.04.2003
(51) Int. Cl.: A01K 13/00

(54) **Animal grooming device**

(30) Priority: 06.09.2002 GB 0220756
(71) Applicant: Slavin, Michael, Pontypool, Gwent NP4 8DQ (GB); Slavin, Kathryn, Pontypool, Gwent NP4 8DQ (GB)
(72) Inventor: Hodgeson, Matthew, Matter New Product Development, Bristol BS8 1JL (GB); Wright, Matthew, Matter New Product Development, Bristol BS8 1JL (GB); Slavin, Michael, Pontypool, Gwent NP4 8DQ (GB)
(74) Representative: Stoner, Gerard Patrick

(57) **Abstract**

An animal grooming device is provided comprising a body 1 having a head portion 3 which has an inlet opening 2 in a downwardly-directed face, and a tubular neck portion 5 extending rearwardly from the head portion which has an outlet opening 4 at the opposed extreme and is adapted for attachment to a suction device; and,
a comb portion 6 comprising a row of spines protruding downwardly from an area of the head portion adjacent to the inlet opening, the body forming a flow passage between the inlet opening and outlet opening. On use hairs and other solid material are dislodged from the animal's coat to be to be sucked in through the inlet opening.

## Description

This invention relates to animal grooming devices.

There is a well-established practice among pet owners of using a household vacuum cleaner to remove loose hair and dirt from the coats of their pets (generally cats and dogs) if the pet will tolerate the noise and sensation. Proposals have been made in the past for a vacuum cleaner fitting specially adapted for this purpose. See e.g. US 3668736, US 3965527, US 5826300, US 5502873, US 4729147, US 1859132, US 5095853, US 5768748 and US 4279095. These disclose various vacuum cleaner fittings, ranging from fittings with a more or less conventional socket to receive the tube end of a commercial vacuum cleaner "wand" to entirely custom-made suction devices with special means for trapping hair, killing fleas and the like. Notably, despite the clear attraction of such a device for pet owners and the apparent simplicity of the technology, no such device has ever achieved widespread use.

We now propose various features in relation to pet grooming attachments, particularly to attachments having the form of a removable fitting for a vacuum cleaner suction tube.

One particular novel proposal herein is for a device of the kind described to have a union portion (socket and/or spigot) which will fit with a sufficiently good seal into or onto rigid tubes of a range of different diameters. This "multifit" feature means that the same attachment can be used with a number of different models of available vacuum cleaners. Typically the tubes on these are about 30 mm in diameter, but the dimensions vary from one manufacturer and one type of cleaner to another.

A particular proposal in this respect is for the attachment to have a tubular union portion which is expandable and/or contractible in a transverse direction. The mode of expansion/contraction should be such as to enable a reasonable seal to be maintained around/inside a tube onto/into which the union portion fits. Preferably this involves a union wall having circumferential flexibility, e.g. being of a circumferentially flexible material, or having one or more circumferentially-flexible portions on its circumference. In one preferred embodiment the circumferentially-flexible portion(s) is/are formed integrally with circumferentially-adjacent relatively inflexible portion(s), as portions which are radially thinner, and preferably preformed with one or more axially-extending folds or pleats so that circumferential dimension changes are preferentially and easily taken up at those points without leakage. Preferably two or more such flexion locations are distributed around the circumference of the union.

In a preferred embodiment the circumferentially expandable/contractible portion is formed integrally with the main body of the vacuum cleaner attachment. The flexion portion(s). mentioned above can extend back a predetermined distance from the end edge of the union, corresponding to the desirable distance of insertion of the vacuum cleaner tube. With more than one flexion portion extending axially, this may give rise to a construction with a set of stiff axially-projecting limbs coated by thinner deformable portions.

A pleated conformation of the flexion portions is particularly preferred because it can provide resilient deformability over a range of diameters, even if its inner or outer extremities are pushed radially. This is valuable where, as is preferred, the flexion portion is formed in one piece with, and of the same material as the stiff remainder of the union, e.g. of a conventional moulding plastic such as polypropylene.

While our own particular interest is in using a fitting of this kind with an animal grooming device of a kind described herein, the skilled person will appreciate that it may be used with other kinds of vacuum cleaner fitting and those other uses are an independent aspect of the present proposals.

Generally speaking, the animal grooming device comprises a body having a head portion which has an inlet opening in a downwardly-directed face, and a tubular neck portion extending rearwardly from the head portion which has an outlet opening at the opposed extreme and is adapted for attachment to a suction device; and,
a comb portion comprising a row or array of spines or teeth protruding downwardly from an area of the head portion adjacent to the inlet opening, the body forming a flow passage between the inlet opening and outlet opening.

The comb portion may be separable from or preferably moulded integrally with the head portion. The comb portion may comprise a substantially linear row of spines. A single row usually suffices, e.g. resembling a conventional domestic animal grooming comb which may extend from a base which is held in a recess extending inwards from the downward face of the head portion, at a position adjacent to the inlet opening. It is preferable that the entire length of each prong protrudes beyond the face of the head portion.

The spines are preferably project at least 1cm, more preferably at least 1.5 or 2cm from the base. However they would not normally project beyond about 6cm, more usually not more than about 4cm. The spacing is usually at least 0.5 or 1mm. Typically not more than 6.5 or 4cm Preferably one row of substantially parallel elongate spines is provided. The length of the row is preferably from 5cm to 15cm or 20cm. The spines may project substantially perpendicularly from the inlet face.

The spines should be stiff and smooth and are preferably made of metal or a plastics material.

The inlet and outlet openings may lie on substantially the same axis. To allow easy manipulation of the grooming device in use, i.e. when attached to a suction device such as the suction hose attachment of a vacuum cleaner, it is preferred however that at least one bend is provided along the length of the body, such that the neck end extends laterally to the face of the head portion in which the inlet opening is formed.

Preferably the comb portion is located to that side of the inlet opening that passes over the animal's coat before the opening does. Usually they will be on the side towards a grip or handle portion of the body, or that side to which the neck projects if it projects laterally, since a pulling action is preferred. Most preferably the comb portion lies entirely to that side of the inlet opening, i.e. there is not comb on the opposite side, and there is no indent opening or part inlet opening further towards that side than the comb portion.

Usually the comb portion is provided at only one side of the inlet opening. The side of the opening having the comb portion is preferably a long side of an elongate opening.

The device is preferably provided as an attachment suitable for vacuum cleaner suction hose, with the neck taking the form required for fitting to the vacuum cleaner hose e.g. having the dimensions required for a conventional overlapping or snap fit, and/or taking a conventional bayonet fitting. The device preferably does not include liquid transfer arrangements.

Preferably the inlet opening has a larger cross-sectional area than outlet opening.

A plurality of grooves or protrusions may be provided on the neck and/or head portion, to allow better grip of the body of the grooming device on use. These may run longitudinally along the length of the body but preferably run laterally extending around at least part of the circumference of the body.

The material from which the body is made is not of particular importance. For example a thermosetting plastic may be used. The body may be made by any conventional process such as injection moulding.

In another aspect an animal grooming device is provided comprising a body having a head portion which has an inlet opening in a downwardly-directed face, and a tubular neck portion extending rearwardly from the head portion which has an outlet opening at the opposed extreme and is removably attached to an inlet of a suction device, e.g. the inlet of a vacuum cleaner hose; and,
a comb portion comprising a row of spines protruding downwardly from an area of the head portion adjacent to the inlet opening;
the body forming a flow passage between the inlet opening and outlet opening.

In a further aspect a method of grooming an animal is provided comprising;
drawing over the animal's body, e.g. in a direction from the animal's head towards the animals tail, a grooming device as described in the aspects above.

The grooming device is generally attached to a suction device such as a conventional vacuum cleaner, allowing the loose hairs and other solid material dislodged from the animal's coat to be removed.

Usually the grooming device is drawn across the animal's body in a pulling movement, preferably in smooth strokes. Usually the action of drawing the grooming device across the animal's body is repeated a plurality of times.

Preferably the grooming device is drawn over the animal in a direction such that the comb portion passes over the animal's coat ahead of the inlet opening. This is found to give best removal of loose hairs, as well as other solid material dislodged from the animal's coat which is not caught by the spines of the comb.

Embodiments of the present invention will now be described in detail by way of example, with reference to the accompanying drawings, in which:
Fig. 1 shows a cross-section of a grooming device in which the present invention is embodied;
Fig. 2 shows a top view of a grooming device in which the present invention is embodied;
Fig. 3 is an end view of a specially adapted tube fitting;
Fig. 3a is an enlarged view of part of Fig. 3 at 'A';
Fig. 4 is a perspective view of the adapted tube fitting, and
Fig. 5 is an oblique view of a further embodiment.

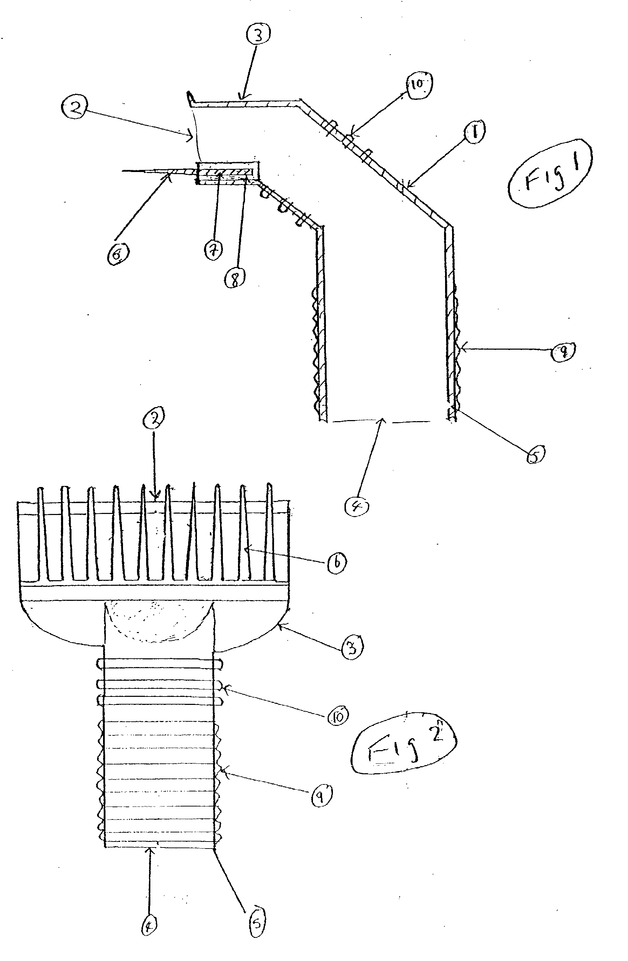

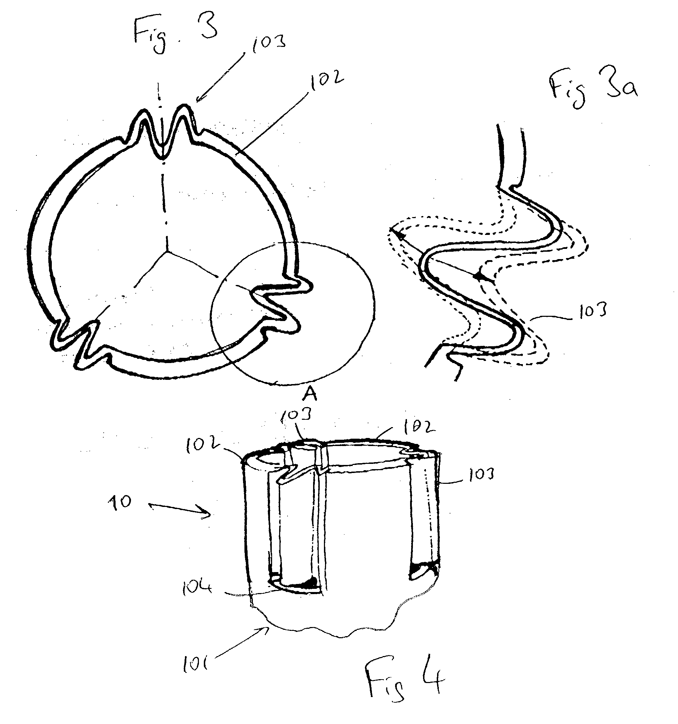

Figures 1 and 2 show a grooming device according to an embodiment of the present invention. The illustrated grooming device has a rigid body 1. There is an inlet opening 2 provided in a downwardly-directed face of a head portion 3, and an outlet opening 4 provided the in the outer extreme of a neck portion 5. The body 1 has two bends along its length such that the neck end extends laterally to the downward face of the head portion.

The open end of the neck portion of the illustrated grooming device has a generally cylindrical shape. The radius of this cylindrical neck portion is determined to allow the inlet end of a conventional vacuum cleaner tube (wand) to be partly inserted into the open extreme of the neck such that the inner wall of the outlet opening in the neck portion corresponds intimately with the outer wall of the vacuum hose. Thus allowing the grooming device to be attached to the vacuum hose. Alternatively the open end of the neck portion may be shaped such that it can be inserted into the inlet end of a vacuum hose. The neck end may also/alternatively take a conventional bayonet fitting. Other methods of attaching the neck portion to a suction device such as a conventional vacuum cleaner will be evident to the person skilled in the art.

When attached to a vacuum cleaner hose, air and solid material are drawn in through the inlet opening 2 and pass through the body to be discharged through the outlet opening 4 towards the body of the vacuum providing the suction force.

A comb portion made up of a single linear row of parallel teeth or spines 6 protrudes from the head portion adjacent to the inlet opening. The spines of the comb extend from a base 7 which is set into a recess 8 in the head portion. The comb portion in the illustrated embodiment is permanently fixed into the recess. Usually the comb portion is integrally moulded with the head. Other methods of holding the comb in place would be evident to a person in the art.

Extending around the outer wall of the neck portion are grooves 9. Further grooves 10 extend around the bent region of the body. The grooves help make the device easy to grip in use.

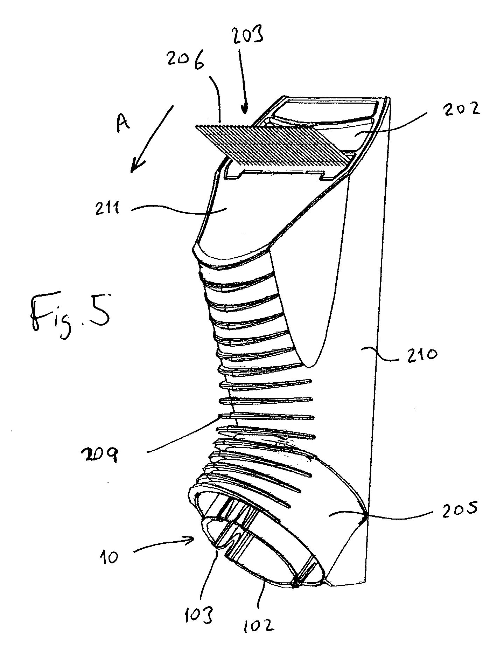

Figs. 3 and 4 show a special inventive construction for the union end of the grooming attachment. The tubular portion 10 of the attachment adapted for fitting to the open end of a rigid vacuum cleaner tube is shown. It is shown fragmented: its continuous tubular wall 101 is formed integrally, e.g. from polypropylene with the body of the rest of the fitting. Near the end the uniform tube is subdivided into three limbs 102, e.g. about 40 mm long, which have the same general thickness as the rest of the tube i.e. are quite stiff. Between these limbs 102 are pleated flexion portions 103, equally spaced at 120° locations. They are formed integrally in the same polypropylene material as the rest of the tube, so there is no difficulty of sealing. Where the flexion portions 103 terminate adjacent the continuous tube 101, a narrow undercut 104 is provided enabling them to move freely in and out. Fig. 3a shows how the pleat portions can flex in and out while retaining their pleated shape and corresponding circumferential expansibility.

In practice, this enables the union 10 to fit to a wide range of vacuum cleaner tube sizes. Not only can a variety of different tube ends be fitted into the fitting - which then grips their outer surfaces, while their usually tapered extremities fit sealingly into the opening of the continuous wall 101 - but the union 10 can also be fitted inside larger-diameter tubes and again provide a grip and seal.

Fig. 5 shows the multi-fit union 10 as seen in Figs. 3,4 incorporated in a complete moulded grooming attachment. In common with the first-described example, the attachment has a body 210 with grip ribs 209 beneath and an angled neck tube 205 where it is to be plugged into or onto the vacuum cleaner end tube. The expansible fitting 10 is moulded concentrically within this neck tube 205; the neck tube 205 guards the fitting 10 against damage or dislodgment. A further feature in this embodiment is that the front face 203 of the attachment has, in addition to the transverse front opening 202 and the row of teeth 206 extending across behind it, a further generally flat guide surface 211 extending out behind the row of teeth. This surface is preferably generally parallel with the axis of the hose connection tube 205,10 at the other end of the attachment. In use, it helps to maintain the alignment of the attachment against the animal's body so that the angle of the teeth 206 can be more easily maintained. The surface 203 projects in front of the teeth 206 in the same plane, for the same reasons, with the opening 202 opening through that plane.

## Claims

1. An animal grooming device comprising a body having a head portion which has an inlet opening in a downwardly-directed face, and a tubular neck portion extending rearwardly from the head portion which has an outlet opening at the opposed extreme and is adapted for attachment to an inlet tube of a suction device; and a comb portion comprising an array of teeth projecting from the head portion adjacent the inlet opening, the body forming a flow passage between the inlet opening and outlet opening; and the outlet opening of the neck portion being adapted to fit onto inlet tubes of a range of different diameters.

2. An animal grooming device according to claim 1 wherein the neck portion has a thick wall interrupted by one or more circumferentially-deformable flexion portions.

3. An animal grooming device according to claim 2 which the circumferentially-deformable flexion portions are pleated and formed in one piece with the thick wall.

4. An animal grooming device according to claim 1, 2 or 3 wherein the comb portion comprises a single substantially linear row of teeth.

5. An animal grooming device according to claim 3 wherein the comb portion comprises a base from which the teeth protrude, said base being held discretely in a recess in the downward face of the head portion.

6. An animal grooming device according to any one of the preceding claims wherein the neck end extends laterally to the face of the head portion in which the inlet opening is formed.

7. A method of grooming an animal comprising; drawing over the animal's body a grooming device according to any one of the preceding claims, thereby dislodging hair from the animal's coat to be sucked in through the inlet opening.
